# EUROPEAN PATENT APPLICATION

(11) **EP 2 284 328 A2**
(43) Date of publication of application: **16.02.2011**
(21) Application number: 10005823.9
(22) Date of filing: 04.06.2010
(51) Int. Cl.: E04D 1/08

(54) **Roof covering element**

(30) Priority: 05.06.2009 NL 1037018
(71) Applicant: Quality Solar Systems, 3284 BB Zuid-Beijerland (NL)
(72) Inventor: Linders, Johannes Cornelis, 3284 BB Zuid-Beijerland (NL)
(74) Representative: Griebling, Onno

(57) **Abstract**

A roof element (10) is described, comprising:
- a rigid plastic upper plate (12) with a waving appearance;
- an insulating body (11) having a front face (13) and a rear face (14), arranged under the upper plate (12) and forming a whole therewith;

wherein the upper plate (12) comprises an overhang (15) extending beyond the front face (13) with an extension length, wherein the upper plate is subdivided into rear section (16) with the same extension length and a front section (17);
wherein an elongate recess (18) is arranged in the bottom face of the insulation body (11), at the location of the rear section (16) and wherein the roof element is provided with at least one hole (82) which, at the location of the rear section (16), extends from the upper plate (12) to the recess (18).

## Description

The present invention relates to roof covering elements for sloping roofs.

Traditionally, roofing tiles are used for covering sloping roofs of houses. The tiles are applied in horizontal rows, wherein always one tile is partially overlapped by its neighbour. Further, each tile is partially overlapped by a tile from a higher row. Thus a covering is constituted that is watertight as good as possible. On the other hand, roofing tiles must be able to withstand wind: they are not allowed to blow away. Therefore, roofing tiles are made of a heavy material such as concrete, ceramics or the like.

The present invention aims to improve on this traditional product.

In the first place, the present invention aims to provide a roof covering element having lower weight and being easier to handle.

It is also known to arrange solar panels on roofs for utilizing solar energy. Esthetically, this is not a nice appearance. Therefore, it is also an objective of the present invention to solve this problem.

The present invention provides a roof covering element having the size of two or more roofing tiles next to each other or above each other. The element has a waving upper surface from plastics, to give the appearance of roofing tiles, with integrated insulation below that. The upper surface can be made in any desirable color. The upper surface and the insulation are attached to each other by for instance vulcanizing, and they thus form a solid whole. The material of the roof covering elements is especially light weight, so that handling the roof covering elements is relatively simple. Therefore, it is possible that the roof covering elements cover a surface corresponding to multiple roofing tiles, so that covering a roof can be done relatively fast. In order to assure that the roof covering elements keep lying well on the roof in the case of strong wind, despite their low weight, the roof covering element in one or more places is screwed to a mounting rail mounted on the roof. This rail is provided with holes provided with thread, which has predetermined positions corresponding to the dimensions of the roof covering elements. Thus, it is possible to mount the roof covering elements very accurately so that an even end result is achieved.

A flexible foil is arranged on the upper surface, provided with flexible solar cells for converting sunlight to electrical energy. Since such flexible solar cells are known per se, a further explanation is not necessary.

Electrical lines from the solar cells extend in the insulation material, and are thus protected against weather influences. At the upper side and at the lower side, the roof covering element is provided with plug-in contacts for electrical coupling with a higher or lower roof covering element. Thus, it is particularly easy for workers to apply the roof covering elements and to also make the necessary electrical connections, while there are no vulnerable threads on or under the roof covering elements.

Dutch patent 1005287 describes a regular roofing tile that at its upper side is provided with a flexible solar cell. This roofing tile still has the disadvantages of a relatively large weight, and is not provided with integrated insulation. This patent does not give any detailed information on the structure of possible contacts.

These and other aspects, features and advantages of the present invention will be further clarified by the following description with reference to the drawings, in which same reference numerals indicate same or similar parts, in which indications "under/above", "higher/lower", "left/right" etc. only relate to the orientation shown in the figures, and in which:
figure 1 schematically shows a perspective view of an embodiment of a roof covering element according to the present invention;
figure 2 shows a schematic horizontal cross-section of the roof covering element of figure 1;
figure 3 schematically shows a side view of two roof covering elements according to the present invention, applied on a sloping roof face;
figure 3A schematically shows a side view in cross-section of one of the roof covering elements of figure 3;
figure 4 schematically shows a mounting strip;
figure 5 schematically shows a ridge design.

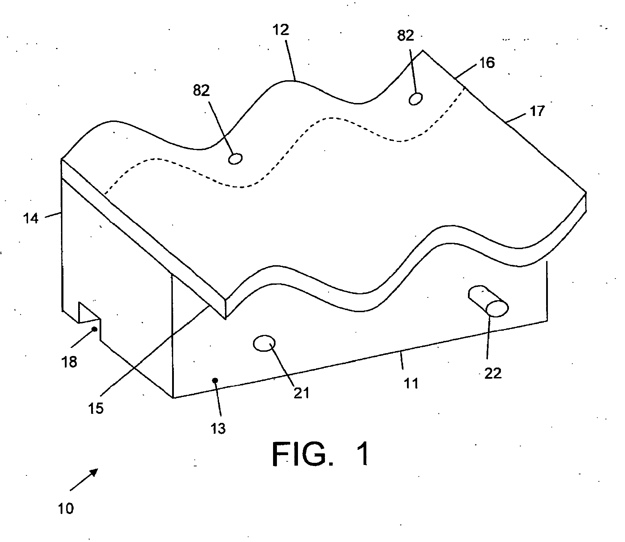

Figure 1 shows a roof covering element 10 according to the present invention. In this embodiment, the roof covering element has dimensions corresponding to two regular roof tiles next to each other. As a variation, it is possible that the roof covering element has dimensions corresponding to one row of 3, 4, 5, 6, or more roofing tiles next to each other. It is also possible that the roof covering element corresponds to multiple rows of roof tiles above each other.

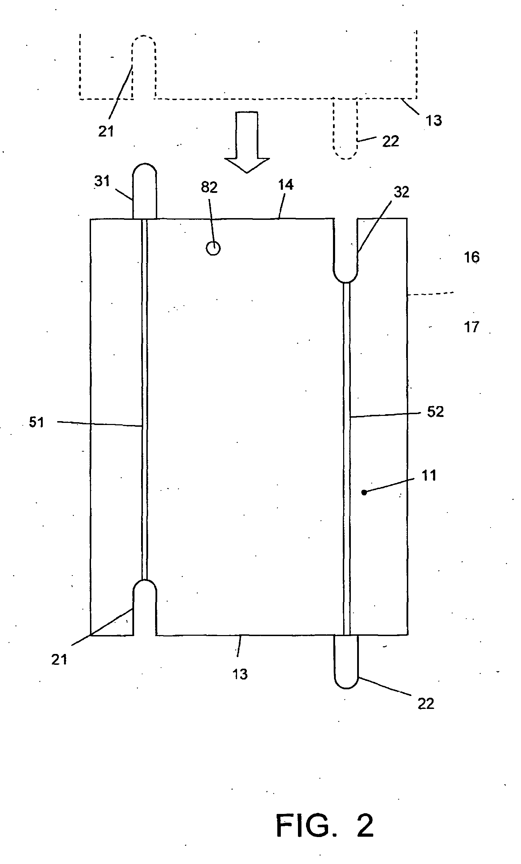

The roof covering element 10 always comprises an insulating body 11, for instance from polyurethane foam, with a substantially rectangular contour and a flat bottom, as well as a rigid upper plate 12 of a plastic, forming an integral whole with the body 11. The body 11, of which the thickness is shown exaggeratedly large in figure 1, has a front face 13 and a rear face 14. The upper plate 12 extends beyond the front face 13; the extending part is indicated as overhang 15. The roof covering element further comprises two electrical plug-in connectors 21 and 22 arranged in the front face 13. Likewise, the roof covering element has two electrical contra-plug-in connectors 31 and 32 arranged in the rear face 14, which is not visible in the view of figure 1 but is visible in the schematic horizontal cross-section of figure 2.

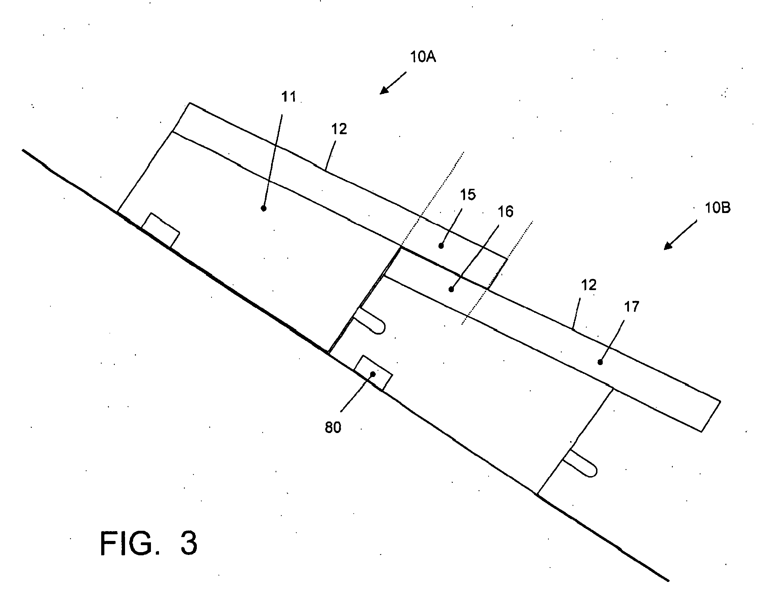

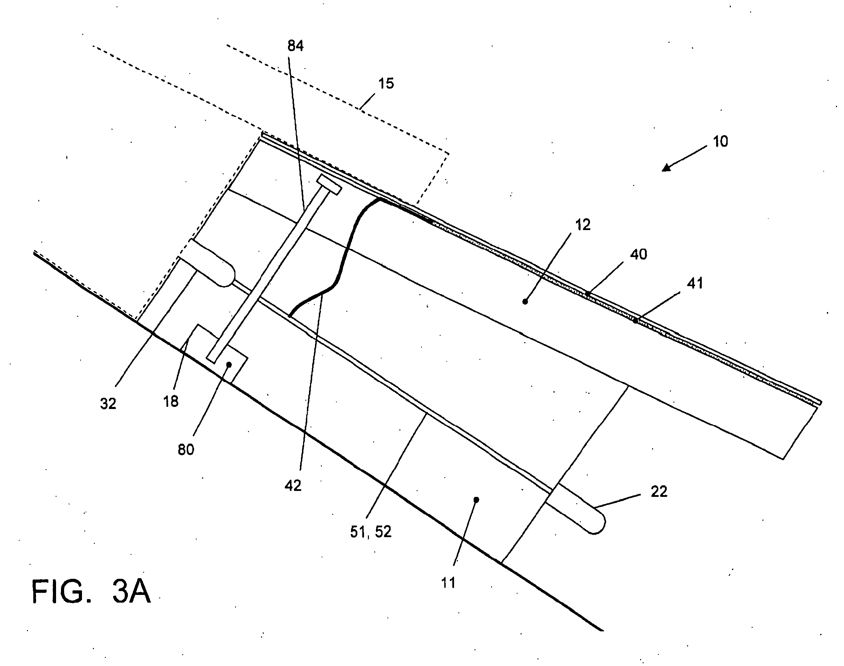

Figure 3 schematically shows two roof covering elements 10A and 10B, of which the upper element 10A has its front face 13 abutting the rear face 14 of the lower element 10B. In that case, the plug-in connectors 21 and 22 in the front face 13 of the rear element 10A are in contact with the counter-plug-in connectors 31 and 32 in the rear face 14 of the front element 10B. In the example, the plug-in connectors comprise a female or bush 21 and a male or banana 22; the same applies to the counter-plug-in connectors 31 and 32. It is also possible that the plug-in connectors 21, 22 are always a male and that the counter-plug-in connectors 31 and 32 are always a female, or vice versa.

Figure 3 also shows that the overhang 15 of the upper plate 12 of the upper element 10A, in the mounted condition, always extends over a rear section 16 of the upper plate 12 of the lower element 10B. The portion of the upper plate 12 excluding this rear section will be indicated as front section 17.

In a larger scale, figure 3A shows that a flexible transparent foil 14 is arranged, for instance glued, on the upper plate 12 of the roof covering element 10. The foil 40 extends both over de front section 17 and over the rear section 16. At its lower side, the foil 40 is provided with one or more flexible solar cells 41, as known per se. Since the foil 40, in the mounted condition, at the location of the rear section is covered by an overhang 15, the foil does not need to have solar cells at that part.

In the insulating body 11, two electrical conductors 51, 52 are arranged, for instance metal bars, which extend between the connectors 21, 22 and the counter connectors 31, 32. Openings are arranged in the rear section 16 of the upper plate 12, at the location of these conductors. Electrical connection wires 42 of the solar cell 41 run towards these openings under the foil 40, and via these openings they run to the interior of the body 11 in order to make contact there with the conductors.

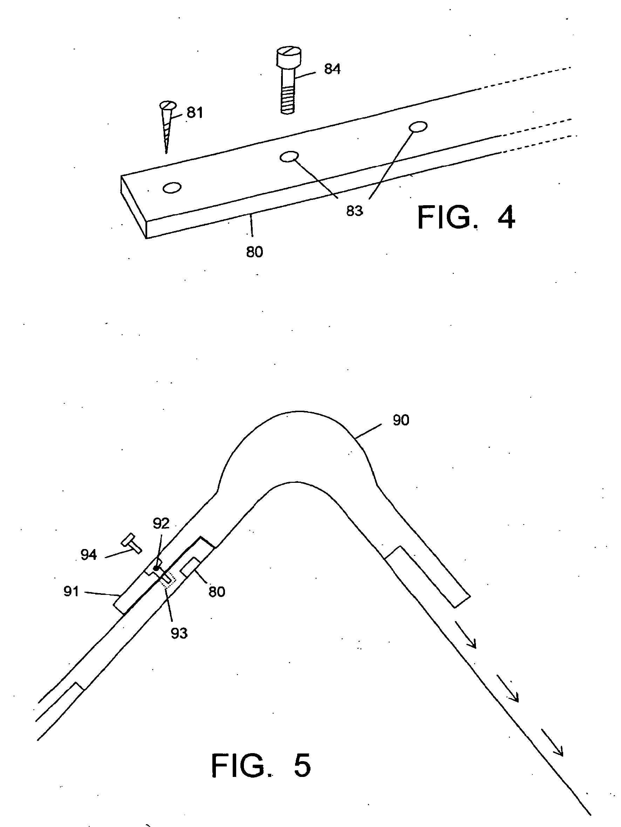

For mounting the roof covering elements on a roof, mounting strips 80 are provided, which are fixed to the roof concerned by screws 81 or the like, and which are provided with threaded holes 83 in predetermined locations, as illustrated in figure 4. In the bottom face of the body 11, at a location below the rear section 16, an elongate recess 18 is arranged over the entire width of the roof covering element, in which the strip 80 fits. Strips are arranged on the roof at the correct mutual distance, parallel to each other, and thus assure a correct vertical positioning of the roof covering elements. The roof covering element is provided with at least one but preferably multiple vertical holes 82 that, in the mounted condition, correspond to the threaded holes 83. By means of one or more screws 84 that are screwed into respective threaded holes 83, the roof covering element is screwed to the strip 80 and is thus fixed with respect to the roof, so that the element can not blow away irrespective of its low weight. The screws 81 are covered by the overhang of the next roof covering element or, in the case of the upper roof covering element, by a ridge elements.

Figure 5 illustrates the design at the top of a roof, where a ridge element 90 forms the upper covering of the roof elements on opposite sides of the roof. Conventionally, roof ridge elements are placed loosely on the summit of the roof, and possibly adhered by cement. According to the invention, the ridge elements are also screwed. The ridge element 90 has an overhang 91 extending over the rear section 16 of the upper roof element 10 and provided with at least one through hole 92. The upper roof element 10 is provided with a blind threaded hole 93. The ridge element 19 is screwed to the upper roof element 10 by a screw 94.

It will be clear to a person skilled in the art that the invention is not limited to the exemplary embodiments discussed in the above, but that several variations and modifications are possible within the protective scope of the invention as defined in the attached claims. For instance, it is possible to provide a light-weight roof covering element without foil with solar cells.

Features which have only been described for a certain embodiment are also applicable in other described embodiments. Features of different embodiments can be combined to achieve another embodiment. Features which have not explicitly been described as being essential may also be omitted.

## Claims

1. Roof element (10), comprising:
- a rigid plastic upper plate (12) with a waving appearance;
- an insulating body (11) having a front face (13) and a rear face (14), arranged under the upper plate (12) and forming a whole therewith;
wherein the upper plate (12) comprises an overhang (15) extending beyond the front face (13) with an extension length, wherein the upper plate is subdivided into a rear section (16) with the same extension length and a front section (17);
wherein an elongate recess (18) is arranged in the bottom face of the insulation body (11), at the location of the rear section (16), and wherein the roof element is provided with at least one hole (82) which, at the location of the rear section (16), extends from the upper plate (12) to the recess (18).

2. Roof element according to claim 1, further comprising:
an elongate recess (18) arranged in the bottom face of the body (11) at a location under the rear section (16), over the entire width of the roof element;
and wherein at least one mounting strip (80) fitting in said recess (18) is provided, capable of being fixed to a roof by screws (81) or the like and provided with threaded holes (83) at predetermined location;
wherein the roof element is further provided with at least one but preferably multiple vertical holes (82) that, in the mounted condition in which the mounting strip (80) is located in the recess (18), are capable of corresponding with the threaded holes (83) of this mounting strip (80), so that the roof element is capable of being screwed to the strip (80) by means of one or multiple screws (84) that are screwed in respective threaded holes (83), whereby the roof element is then secured with respect to the roof concerned.

3. Roof element according to claim 1 or 2, further comprising:
- electrical plug-in connectors (21, 22) arranged in or on the front face (13);
- plug-in connectors (31, 32) arranged in or on the rear face (13), matching the plug-in connectors (21, 22) of the front face (13);
- respective conductors (51, 52) that connect respective plug-in connectors (31, 32) of the rear face (14) electrically to respective plug-in connectors (21, 22) of the front face (13);
- flexible solar cells (41) arranged on the upper face of the front section (17);
- a foil (40) arranged over the flexible solar cells (41) and over the rear section (16);
wherein the solar cells (41) are connected to the respective conductors (51, 52) by conductors (41) running under the foil (40) and extending via at least one opening arranged in the rear section (16).
